# EUROPEAN PATENT SPECIFICATION

(11) **EP 0 633 848 B1**
(45) Date of publication and mention of the grant of the patent: **18.12.1996**
(21) Application number: 93907993.5
(22) Date of filing: 05.04.1993
(51) Int. Cl.: B60T 7/08

(54) **MECHANISM FOR ACTUATING A VEHICLE PARKING BRAKE**
MECHANISMUS FÜR DIE BETÄTIGUNG EINER FAHRZEUG-FESTSTELLBREMSE
MECANISME POUR ACTIONNER UN FREIN PARKING D'UN VEHICULE

(30) Priority: 07.04.1992 GB 9207592
(43) Date of publication of application: 18.01.1995
(73) Proprietor: SIMPLISTIK DESIGN LIMITED, Leighton Buzzard, Bedfordshire LU7 7LF (GB)
(72) Inventor: BUNKER, Gavin, Stony Stratford Buckinghamshire MK11 1EE (GB); BUNKER, Timothy, Rearsby, Leicestershire LE7 8YN (GB)
(74) Representative: W.P. THOMPSON & CO.
(86) International application number: GB9300709
(87) International publication number: WO9319958

(56) References cited:
- EP-A- 0 474 328
- WO-A-92/08628
- DE-A- 3 610 525
- US-A- 2 220 131
- US-A- 2 871 713

## Description

This invention relates to actuating mechanisms for parking brakes of vehicles.

A known type of hand-operated vehicle parking brake uses a lever to tighten a brake cable, which is held taut by a locking pawl engaged with a ratchet. A typical lever ratio is 7 to 1 so a long lever is necessary. During the lifetime of the vehicle adjustment of the hand brake is necessary, in order to take up sag in the cable. Hand brakes are noisy as the ratchet and pawl mechanism clicks as the brake is applied. Similar problems arise with foot-operated parking brakes.

US-A-2871713 describes a transmission brake mechanism in which a hand-operated lever operates a pair of wobble plates which act upon a brake-operating rod. The action of the wobble plates on the rod allow it to be moved progressively with successive strokes of the lever in one direction. The brake is released by movement of the lever in the opposite direction beyond its normal rest position. The mechanism is such that the rod is never simultaneously free from engagement with both plates.

The present applicants' patent application WO92/08628 (PCT/GB91/02022, claiming priority from GB 9025041.6) describes a handbrake which replaces the ratchet and pawl mechanism with a tiltable frictional drive plate. The handbrake used a collapsing lever which returned a drive plate to a rest position when the handbrake was applied, which has the advantage that, as the lever is not integral with the mechanism, one can construct this lever from a flammable or meltable material such as certain plastics, without the risk that the brake could be released during a vehicle fire.

However the feature of a collapsible lever may prove unacceptable to the car industry and therefore it is an object of this invention to overcome the above mentioned disadvantage whilst retaining the other advantages of a handbrake which do not use a pawl and ratchet mechanism.

The invention provides an actuating mechanism for a vehicle parking brake, comprising an actuating member which is movable relative to a mechanism mounting means between a first, brake-off and a second, brake-on position, an output member which moves in a brake-applying direction when the actuating member moves from its first to its second position, a tiltable drive element having an aperture through which the output member extends and which is tiltable from a released position to a position in which it engages the output member frictionally in its aperture, a releasable means for holding the output member at least when in a position corresponding to the second position of the actuating member, and a release means for the holding means, characterised in that the output member moves in a brake-releasing direction when the actuating member moves from its second to its first position, the tiltable apertured drive element is connected through a coupling means to the actuating member and couples the actuating member to the output member, and by a blocking means which prevents movement of the actuating member from its second to its first position prior to release of the holding means.

The actuating member is preferably pivotably mounted on the mounting means. Advantageously, the actuating member is resiliently biased into its first position.

The blocking means can comprise the cooperation between the drive element, the actuating member and the coupling means, in resisting the movement of the actuating member from its second position prior to release of the holding means.

Preferably the coupling means comprises a pivotable connection between the actuating member and the drive element, the fulcrum of which may be movable. More preferably the coupling means comprises a pin mounted on one of the actuating member and the drive element, slidably located in a slot in the other of these, the slot advantageously extending substantially perpendicular to the direction of movement of the output member in the released position of the drive element.

When such a mechanism is mounted in a vehicle, the actuating member will be positioned for hand or foot operation by the driver.

Preferably the actuating member is operated manually. The actuating member can comprise a lever, or a pistol grip which when pulled operates the actuating member. Alternatively the actuating member comprises a foot-operated pedal which may be biased to extend upwardly and forwardly, and which when depressed operates the actuating mechanism.

The release means may be operated at a position separated from the actuating member. The release means may be, for example, mechanical, hydraulic or vacuum means. Preferably the release means comprise a hand operable portion of a lever actuating means adjacent a portion of the lever which is shaped for gripping by hand. The release means can be connected to the holding means by a link rod extending longitudinally within the lever.

Advantageously, the mechanism includes resilient biasing means acting between the lever and its hand-operable portion, the resilient bias requiring to be overcome by movement of the hand-operable portion before the holding means can be released.

The resilient biasing means may take the form of a compression spring which is compressed upon movement of the hand-operable portion, for example a release button, of the actuating member. It is thus very difficult to release the brake mechanism by movement of the hand-operable portion alone, it being necessary also to relieve the load imposed by the brake mechanism by grasping the actuating member, the biasing force of the resilient biasing means being sufficient to release the holding means only when the imposed load is taken up through the actuating member. This provides an important safety feature against inadvertent release of the brake mechanism.

When mounted in a vehicle the output member is connected to a rod, cable or other element linking it to the parking brake of the vehicle. Alternatively the output member may be the brake cable itself, which would be sheathed in a suitable protective material.

The output member which is preferably slidably mounted on the mounting means, can be elongate. The output member can be constructed with any suitable transverse cross section, which need not be uniform along its length.

The holding means advantageously comprises an element which has an aperture through which the output member extends and through which the output member is free to move in the released position of the holding means, the holding element being tiltable to engage the output member frictionally in its aperture.

The holding element is preferably resiliently biased into a position which prevents the output member from passing through its aperture.

For certain vehicle applications however the holding element may be constrained in its released position when the actuating member is in its first position.

Advantageously, the mechanism includes resilient biasing means acting to assist the engagement of the drive element with the output member.

Preferably the mechanism includes means to compensate for wear in the brake mechanism of the vehicle. Such compensation means can comprise means to vary the rest position of the output member. When the output member is elongate, the compensation means can comprise an abutment element which abuts the mounting means to define the rest position of the mechanism and which is slidable on the output member so as to be brought into contact with a stop on the mounting means when adjustment is necessary, such contact moving the abutment element on the output member to re-define the rest position.

Alternatively, the compensation means can comprise resilient biasing means acting between the output member and the mounting means to apply a compensating force to the output member to define its rest position.

Retaining means can be provided to hold the compensation means within the actuating mechanism when a restraining force is not being applied to the output member.

Conveniently there is provided a means that senses when the parking brake has been applied and activates a remote signalling means that indicates when the parking brake has been applied. The sensing means can comprise a switch sensitive to applied force mounted on the output side of the output member, or may be a switch sensitive to the position of the slidable abutment element of the compensation means.

Advantageously, the mechanism includes damping means for damping movement of the output member, at least in its brake-releasing direction. Such damping means may comprise a piston which is movable in a cylinder containing a damping fluid, the piston for example having a bleed passage allowing the damping fluid to pass from one side of the piston to the other during its movement in the cylinder.

By way of example, embodiments of the invention will be described with reference to the drawings in which:
Figure 1 is a side view of a hand-operated brake actuating mechanism with the brake off,
Figure 2 is a side view of the brake actuating mechanism shown in Figure 1 as the lever of the mechanism is raised in order to apply the brake,
Figure 3 is a side view of the brake actuating mechanism shown in Figures 1 and 2 after an attempt at lowering the lever whilst the brake is still applied,
Figure 4 is a side view of a first modification of part of the mechanism,
Figure 5 is a side view of a second modification of part of the mechanism,
Figure 6 is a section on the line A-A of Figure 5,
Figure 7 is a side view of a third modification of part of the mechanism,
Figure 8 is a perspective view of a frame part of the mechanism,
Figure 9 is a side view of a second embodiment,
Figure 10 is a side view of a third embodiment which is foot operated,
Figure 11 is a side view of a mechanism for signalling that the brake has been applied,
Figure 12 shows, in section, a part of a first modification of the second embodiment,
Figure 13 shows a part of a second modification of the second embodiment, and
Figure 14 shows, in section, a part of a further modification of the first embodiment.

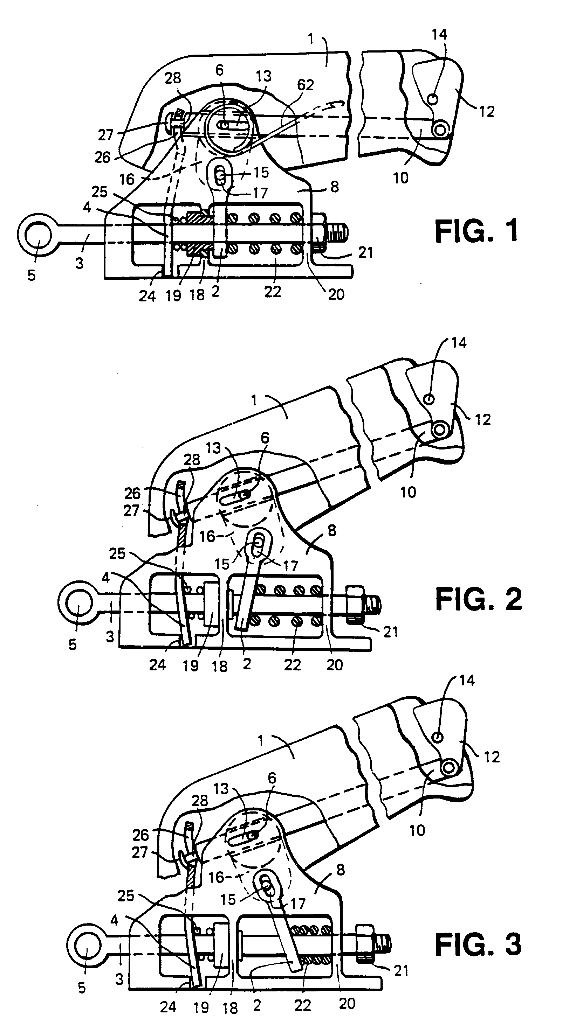

It should be noted that in both figures 2 and 3 the inclination of the tilt of the drive plate has been exaggerated to increase the clarity of the drawings.

Referring to Figure 1, the mechanism comprises a pivotable hand-operated actuating lever 1 engaging a drive plate 2, which moves an output rod 3, which can be frictionally held by a lock plate 4. The rod 3 is connected to a brake cable through an eye 5.

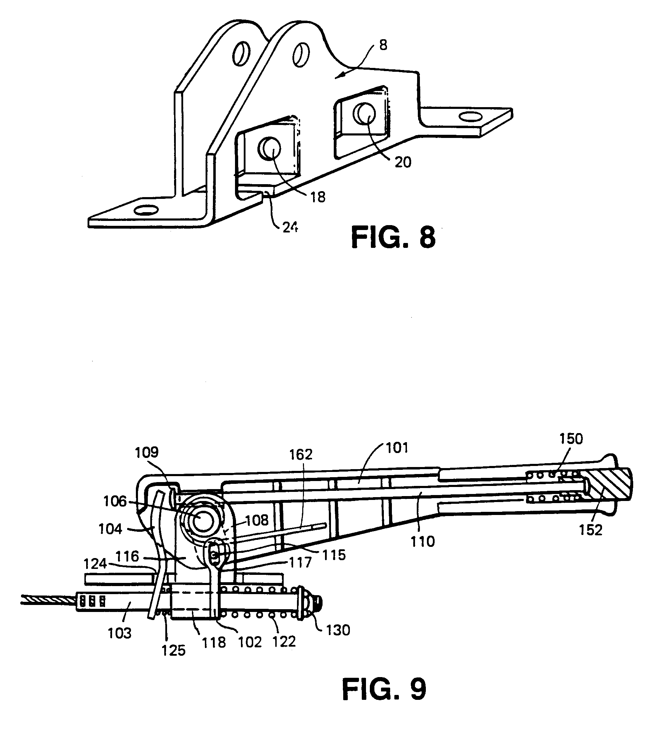

The lever 1 can rotate about a pivot pin 6 which is mounted in a frame 8 (see Figure 8) rigidly fixed to the vehicle. A coil spring 62 of the rat-trap type is mounted around the pivot pin 6 of the lever 1 and acts between the frame 8 and the lever 1. Thus the spring 62 biases the lever towards its lowered, rest, position. For the sake of clarity the spring 62 is omitted from Figures 2 and 3. A release button 12 pivots on a pin 14 fixed to the lever 1. The lever 1 has a lobe 16 which is connected to the drive plate 2 through a pin 15 mounted on the lobe 16, the pin 15 passing through a longitudinal slot 17 in the top of the drive plate 2.

A pull rod 10 is pivotally attached at its outer end to the release button 12 and extends within the lever 1. A slot 13 in the pull rod 10 receives the pivot pin 6 and allows longitudinal movement of the pull rod 10 relative to the lever 1.

The output rod 3 is mounted to slide through apertures in inwardly-turned tabs 18, 20 of the frame 8 and through holes in the drive plate 2 and the lock plate 4. To facilitate the rod 3 sliding through the frame 8 a bush 19 is positioned on the tab 18. The drive plate 2 is constructed so it will frictionally hold the rod 3 unless substantially perpendicular with it. The lock plate 4 is arranged to frictionally hold the output rod 3 against movement in a direction which would release the brake, that is from right to left in Figures 1 to 3. If the plate 4 is substantially perpendicular with the output rod 3 then the rod 3 can move through the lock plate 4 in either direction. The end of the rod 3 is prevented from sliding through its aperture in the tab 20 by a nut 21 threaded on the end of rod 3. A light helical compression spring 22 is concentric with the output rod 3 and acts between the drive plate 2 and the tab 20 of the frame 8.

The lock plate 4 has one end located in a recess 24 in the frame 8; the other end has a slot 26 through which a neck 28 formed near the inner end of the pull rod 10 extends. The inner end of the pull rod 10 terminates at a stop plate 27. A spring 25 is positioned concentrically about the rod 3 between the lock plate 4 and the bush 19 such that the lock plate 4 is biased into a tilted position in which it engages the output rod 3.

The arrangement may be as shown in Figure 1, in which the lock plate 4 is substantially perpendicular to the output rod 3 in the lowered position of the lever 1. Such an arrangement may be advantageous in certain vehicle applications. Preferably however the arrangement is such that the spring 25 biases the lock plate 4 into a tilted position (as shown in Figures 2 and 3) in the lowered position of the lever 1.

A switch (not shown) which is sensitive to applied force is mounted on the output side of the output rod 3. When a force is applied to the brake cable which exceeds the force required to balance the spring 22, the switch operates a remote signalling means, for example a light on the facia, which indicates that the parking brake has been applied.

When the brake is released the mechanism adopts the position shown in Figure 1. To apply the brake the lever 1 is raised manually, by rotating it anti-clockwise as viewed in Figure 1, about the pivot 6. During this movement, the pin 15 tilts the drive plate 2 by acting through the slot 17 until this plate becomes frictionally engaged with the output rod 3. This engagement is assisted by the action of the spring 22 on the drive plate 2. Further rotation of the lever 1 about the pivot 6 causes the output rod 3 to slide so as to tighten a brake cable pivotably attached to the eye 5 and so apply the brake.

During initial raising movement of the lever 1, the inner end of the pull rod 10 follows the profile of the lock plate 4, the slot 26 in the lock plate 4 allowing movement of the pull rod 10 relative to the plate 4 and the upper portion of the plate 4 being arcuate to accommodate movement of the pull rod 10 as the lever 1 is raised. The pull rod 10 is thus prevented from sliding longitudinally relative to the pin 6 until a position of the lever 1 is attained in which the drive plate 2 has moved the output rod 3 forward. If the lock plate 4 adopts a perpendicular position when the lever 1 is lowered, the next lower portion of the lock plate is shaped such that, towards the end of the raising movement of the lever 1, the lock plate is tilted relative to the output rod 3 to retain the rod against return movement, as shown in Figure 2.

Once the brake has been applied the lever 1 cannot be lowered to the brake releasing position, without first operating the release button 12. If an attempt is made to lower the lever when the output rod 3 is locked by the lock plate 4, because the drive plate 2 is unable to slide the rod 3, it is possible to lower the lever only a small distance, which moves the pin 15 within the slot 17 and tilts the drive plate 2 in the opposite direction as shown in Figure 3. As the drive plate remains tilted with respect to the output rod 3 it continues to be in frictional engagement with the rod 3. Thus when the brake has been applied the drive plate 2 can wobble between the limits of the two positions shown (greatly exaggerated) in Figures 2 and 3 and the free travel of the lever 1 is similarly restricted.

To release the handbrake the release button 12 is depressed which rotates it about the pin 14 and slides the pull rod 10 longitudinally relative to the pin 6. Thus the lock plate 4 is released from engagement with the output rod 3. As the output rod 3 is free to slide within the lock plate 4, when the lever is lowered, the drive plate 2 pivots anticlockwise about the output rod 3 as the pin 15 moves upward within slot 17. The output rod 3 is moved to the left (as shown in the Figures 1 to 3) under the control of the driver lowering the lever 1 and the brake cable is released gradually. Thus the handbrake returns to the rest position shown in figure 1.

In order to improve the engagement between the lock plate 4 and the output rod 3 in the embodiment described the contact surfaces of these components can, if desired, be suitably treated or shaped, for example roughened or serrated.

In the embodiment just described the rest position of the output rod 3 is determined by the nut 21 which must be adjusted from time to time. This tends to be a difficult operation. Modifications of the embodiment provide means to adjust the rest position of output rod 3 in order to compensate for a reduction in the brake cable tension over a vehicle's lifetime.

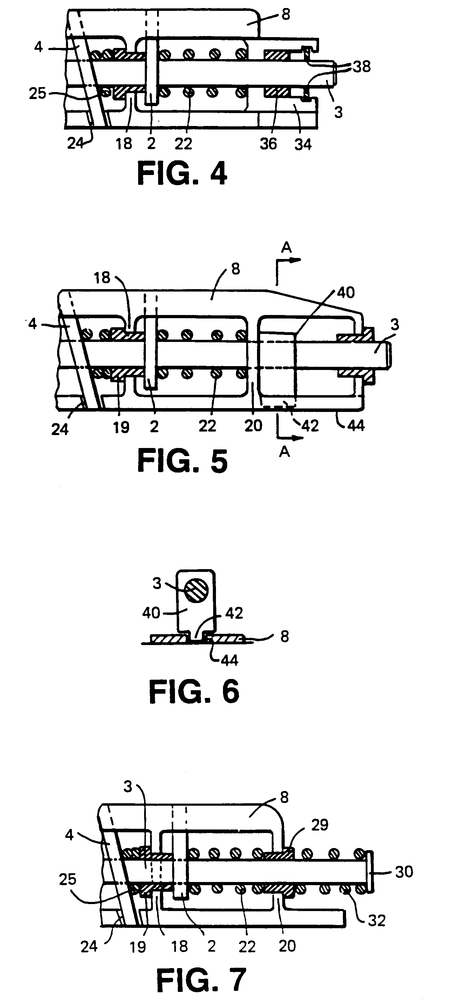

A means which compensates for cable sagging is shown in Figure 4 and comprises a bush housing 34 forming an extension of the frame 8, a bush 36 which is an interference fit on the output rod 3 and a bush stop 38 on the housing 34. When the output rod 3 moves, the bush 36 and the rod 3 move together until the bush 36 abuts the stop 38. If the output rod 3 moves further it slides through the bush 36 which shortens the operative length of rod and thus compensates for any reduction in the cable tension.

An alternative adjusting means, shown in Figures 5 and 6, comprises a bush 40 with a rib 42, which is slidable within a slot 44 in the frame 8. The bush 40 is in interface fit with the output rod 3. As the mechanism is operated the bush 40 and the output rod 3 slide together until the bush 40 is arrested by the end of the slot 44, when the rod 3 slides through the bush 40 to take up any slack in the cable.

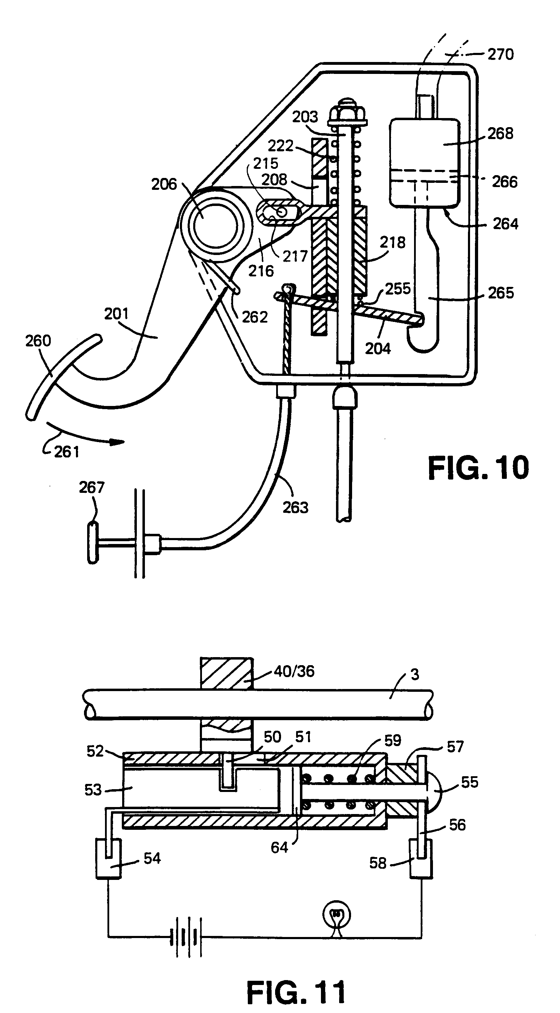

If either of the self-adjusting mechanisms described above is fitted to the actuating mechanism, part of these self-adjusting mechanisms can be used to signal that the parking brake has been applied. When the parking brake is applied the bush 36 or 40 moves, and a switch, sensitive to the position of the bush 36 or 40 operates a signalling device. Such a signalling means is shown in Figure 11.

A peg 50, which protrudes from the siding bush 36 or 40, extends through a slot 51 in a tubular housing 52 with a closed end. The end of the peg 50 is located in a groove in a piston 53. The piston 53, which is an electrical conductor, is slidable within the housing 52 and is in electrical contact with an electrical terminal 54. A rivet 55, which is also an electrical conductor, is positioned between the closed end of housing 52 and the piston 53. The rivet 55 extends through a hole in the closed end of the housing. An electrical conductor 56 and a bush 57 are positioned between the head of the rivet 55 (which extends from the housing 52) and the outside of the housing 52. The electrical conductor 56 is in electrical contact with an electrical terminal 58. A spring 59 is mounted concentrically around that part of the rivet 55 which is inside the housing 52. The spring 59 abuts a plate 64 which forms the end of the rivet 55 furthest from the head of the rivet. The force of the spring 59 acting between the plate 64 and the inside of the housing 52 keeps the rivet head closely in contact with the conductor 56. A battery and a bulb are connected in series between the electrical terminals 54 and 58.

When the actuating mechanism moves the output rod 3, the bush 36 or 40 also moves (to the right, as shown in Figure 11). Thus the piston 53 also moves within the housing 52 such that the piston 53 initially makes contact with the plate 64 at the end of rivet 55 and then compresses the spring 59. Thus the electrical circuit between terminals 54 and 58 is completed and the bulb illuminates indicating that the actuating mechanism has tightened the brake cable and thus applied the brake. When the actuating mechanism is released the output rod 3 moves to the left as shown in Figure 11 which moves the bush 36 or 40 and hence the peg 50 and the piston 53 also to the left as shown in Figure 11, and the contact between the piston 53 and the plate 64 is broken which extinguishes the bulb, indicating that the parking brake has been released.

A further self-adjusting means is shown in Figure 7 and comprises a bush 29 which is positioned on the tab 20 and through which the output rod extends, an abutment plate 30 fixed to the end of the output rod 3, and a helical compression spring 32 mounted concentrically on the rod 3 between the plate 30 and the bush 29. The force exerted on the plate 30 by the spring 32 decreases the operating length of the output rod 3 when the tension in the brake cable decreases.

A shear pin or a wedge can be used to retain any of the self-adjusting mechanisms within the actuating mechanism during assembly of the actuating mechanism. Once the actuating mechanism has been fixed to a vehicle a brake cable is either attached to the output member or threaded through the mechanism to serve as the output member. The wedge or the shear pin lock the mechanism in the rest position. The first time the actuating mechanism is to be operated, either the wedge is removed, or the shear pin breaks as the actuating member is applied. The self-adjusting mechanism then automatically alters the rest position of the output member to optimise operation of the actuating mechanism.

The second embodiment, shown in Figure 9, is broadly constructed as the first embodiment with the following modifications. Elements corresponding to those of the first embodiment are numbered identically in Figure 9 with the addition of one hundred.

A spring 122 acts between the drive plate 102 and an abutment plate 130 fixed to the end of the output rod 103. Thus the spring 122 automatically adjusts the cable tension. The lever 101 is biased into its lowered, rest, position by the coil spring 162.

The pull rod 10 of the first embodiment is replaced by a push rod 110 which is slidable within the lever 101. To release the lock plate a button 152 is depressed. The button 152 is biased by a spring 150 to protrude from the end of the lever and is connected to the end of rod 110. The push rod 110 is retained in its rest position by a restraining head 109 which is fixed to the push rod 110 and abuts against the lever 101 at a point adjacent to the pivot 106. The rod 110 moves down the lever, and pushes the upper end of the lock plate 104, slanted in the opposite direction from the first embodiment which releases the output rod 103. This arrangement has the advantage that because the push rod 110 pushes the lock plate to release the output rod 103, the lock plate 104 does not have to be connected to the rod 110 through a slot in the rod 10 as in the first embodiment. The upper end of the lock plate 104 and the push rod 110 are both shrouded by the lever 101.

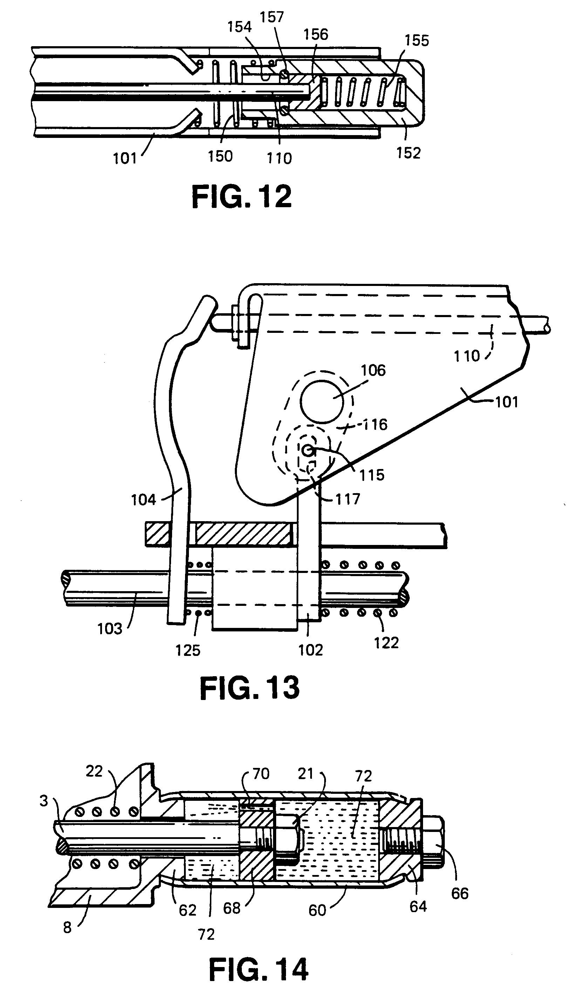

It will be noted that, in the lowered position of the lever 101, the push rod 110 does not contact the lock plate 104. This allows the spring 125 to bias the lock plate 104 into a tilted, locking position, the lock plate pivoting against one edge of the slot 124 in the frame. In the modification of Figure 13, the lock plate is held in its perpendicular position in the lowered position of the lever.

In the third embodiment, shown in Figure 10, elements corresponding to those in the first embodiment are numbered identically with the addition of two hundred. In general the parts of the actuating mechanism that are not described below are arranged similarly to the previous embodiments.

The mechanism comprises a foot pedal 260 biased by a helical torsion spring 262 into a rest position as shown in Figure 10. The pedal 260 is connected through a lever 201, a pivot 206, a lobe 216 and a pin 215 to the slot 217 in the drive plate 202. One end of the lock plate 204 is attached to a release cable 263. At the other end of the release cable 263 is a release handle 267. The other end of the lock plate 204 is attached to a release rod 265 which forms part of a pressure release mechanism shown generally as 264. The lock plate 204 can be attached to both the manual and the pressure operated release mechanisms as is shown in Figure 10, or these two releasing mechanisms can be considered as alternatives, a single one of them being attached to either end of the lock plate 204.

The pressure release mechanism 264, comprises a release rod 265 attached to a piston 266 housed within a cylinder 268 which is connected via a fluid conduit 270 (e.g. an air line) to a means for reducing pressure (e.g. a pump).

To operate the parking brake (as viewed in Figure 10) the foot pedal 260 is depressed against the spring 262, in the direction of arrow 261. This causes the left side of drive plate 202 to move upwards of the pin 215 rotates counter-clockwise about pivot 206 within slot 217 which forces the output rod 203 upward, tightening the brake cable. Once the brake pedal is depressed it cannot be raised until the lock plate is released. To release the parking brake the drive applies the foot pedal 260 of the parking brake and the lock plate 204 can then be pivoted in the correct sense to release the output rod 203. When the lock plate is released the foot pedal will rise slowly due to the action of the spring 262 against the force applied by the lever. Thus the brake will be released gradually in a controlled manner due to the tilt of the drive plate 202.

The lock plate 204 can be pivoted either manually by pulling handle 267 to tighten the release cable 263, or by reducing the pressure to the pressure system 264 which moves rod 265 upward (as viewed in Figure 10). The pressure system can be actuated remotely from an electrical switch on the facia, or automatically such as in response to a means for detecting that the accelerator pedal is depressed. Such detection means could operate as follows. The source of reduced pressure in the pressure means 264 of this embodiment is the pressure differential across the engine manifold. When the car is parked the engine is idle, and there is not a large enough pressure differential across the pressure release mechanism 264 to release the lock plate 204. However, when the accelerator is depressed the pressure differential across the engine manifold increases to its maximum and hence the pressure release mechanism 264 can pivot lock plate 204 to release the parking brake.

Figure 12 of the drawings shows a modification of the release button of the embodiment shown in Figure 9. As in the Figure 9 embodiment, the release button 152 is biased by a spring 150 which acts between the button 152 and the lever 101. The release button 152 is not however attached directly to the push rod 110. Instead, the button 152 has a cylindrical recess 154, in which a further helical compression spring 155 is located. The spring 155 acts between the closed end of the recess 154 and an enlarged head 156 attached to the end of the push rod 110. A circlip 157, seated in a groove in the wall of the recess 154, retains the release button 152 on the rod 110.

The arrangement just described provides a "soft-release" feature, whereby the possibility of inadvertent release of the brake through accidental contact with the release button 152 is reduced. This is because, to release the brake mechanism, it is necessary for an operator not only to depress the release button 152 but also to take up the load imposed by the brake mechanism by grasping the lever 101. It is only when the imposed load is taken up in this way that depression of the release button 152 will produce the movement of the push rod 110 necessary for release of the brake mechanism, the force of the spring 155 be sufficient to release the lock plate 4 only when the braking load is relieved by the operator holding the lever 101. It is thus made very difficult for the brake to be released by unintentional contact with the release button alone.

Figure 13 of the drawings shows a further modification of the embodiment shown in Figure 9. In this modification, the lock plate 104 is shaped such that, in the rest position of the lever 101, the upper end of the lock plate 104 is in contact with the end of the push rod 110. The lock plate 104 is thus maintained in a position in which it is substantially perpendicular to the axis of the output rod 103. This has the result that, in the rest position of the lever, the lock plate 104 is maintained in a position in which the output rod 103 is free to move through the lock plate aperture and the drive plate aperture. As a result, any movement of the output rod resulting from movement in the linkage to the vehicle's brakes, arising, for example, during transportation or normal use of the vehicle, will simply result in movement of the output rod 103 relative to the remainder of the actuating mechanism. The movement of the brake linkage will have no effect on, for example, the state of adjustment of the actuating mechanism which operates as described above with the lock plate 104 engaging the output rod 103 during raising of the lever 101.

Figure 14 of the drawings shows a release damper fitted to the actuating mechanism of Figures 1 to 3. The damper consists of a cylindrical sleeve 60 which is fitted to a boss 62 on the frame 8, the adjacent, inner end of the sleeve 60 being tapered inwards to engage the boss 62. The other, outer end of the sleeve 60 is similarly tapered and engages a plug 64 which seals the outer end of the sleeve, the plug 64 being expanded by a bolt 66 for this purpose. The output rod 3 is slightly longer than in Figures 1 to 3 and carries a piston 68 which is held in place by the nut 21. The piston 68 has an axial passage 70 which is small in cross-section compared with that of the sleeve 60.

The interior of the sleeve 60 forms a sealed space which contains a viscous liquid 72, in which the piston 68 moves upon movement of the output rod 3. During such movement, the liquid 72 flows from one side of the piston to the other through the restricted passage 70. The sleeve and piston thus act as a damper which restrains the movement of the rod during release of the vehicle brake, so that the effect of any strong restoring force in the parking brake mechanism is reduced and progressive release of the brake is achieved.

It will be appreciated that the modifications shown in Figures 12 to 14 can be applied to any of the embodiments described in this specification, either separately or in combination.

The brake actuating mechanisms described in this specification have several advantages over the prior art.

When the lever is raised, the point at which the force is applied to the drive plate (through the slot by the pin) moves, increasing the mechanical ratio of the lever to the drive plate. Thus the work required to produce a given force on the cable reduces as the brake actuator is applied. In any event less work is required to tighten the brake cable compared with a traditional hand brake. This is a particular advantage for drivers who are disabled, elderly or infirm. The reduced mechanical ratios required allow the mechanism to be made smaller, which further reduces its weight and cost.

Because the actuating mechanism does not use a ratchet and pawl mechanism, the actuation mechanism is very quiet to operate, operates continuously on the brake cable rather than in steps, and reduces or eliminates the free travel of the actuator before the brake cable tightens. This is to be compared with known handbrakes, which typically apply no work to the brake cable during the first three clicks of the ratchet.

The mechanism can self-adjust for variations in brake cable tension and prevent sagging. This reduces maintenance costs and improves the safety and reliability of the actuating mechanism. A wedge or shear pin holds the self adjusting part of the actuating mechanism until the initial operation of the actuating member. Thus assembly of the whole mechanism is made easier. Once the actuating member is applied the self adjusting mechanism optimises the position of the output member which removes the need for adjustments to be made on the vehicle assembly line. This saves time and reduces the assembly cost of the vehicle. The mechanism can be removed or replaced from the vehicle easily, and can be attached to a variety of different vehicles without modification because the self adjusting mechanism optimises the actuating mechanism for operation in each vehicle.

The hand operated embodiments of the invention have the further advantage of being operated in the traditional way, i.e. the lever cannot be lowered without first unlocking the brake. Thus the brake can be operated without additional instruction of the driver. All embodiments of this brake are particularly safe, as when applied the brake cable is held in place by frictional contact with two plates (both the lock plate and the drive plate).

The modifications described with reference to Figures 12 to 14 provide advantageous features, as already mentioned.

## Claims

1. An actuating mechanism for a vehicle parking brake, comprising an actuating member (1;101;201) which is movable relative to a mechanism mounting means (8;108;208) between a first, brake-off and a second, brake-on position, an output member (3;103;203) which moves in a brake-applying direction when the actuating member moves from its first to its second position, a tiltable drive element (2;102) having an aperture through which the output member extends and which is tiltable from a released position to a position in which it engages the output member frictionally in its aperture, a releasable holding means (4;104;204) for holding the output member at least when in a position corresponding to the second position of the actuating member, and a release means (10,12;110,152;263-270) for the holding means, characterised in that the output member moves in a brake-releasing direction when the actuating member moves from its second to its first position, the tiltable apertured drive element (2;102) is connected through a coupling means (15,17;115,117;215-217) to the actuating member and couples the actuating member to the output member, and by a blocking means which prevents movement of the actuating member from its second to its first position prior to release of the holding means.

2. A mechanism according to claim 1, in which resilient biasing means (22;122;222) act to assist the engagement of the drive element with the output member.

3. A mechanism according to claim 1 or 2, in which the actuating member is pivotably mounted (6;106;206) on the mounting means.

4. A mechanism according to any preceding claim, in which the actuating member is resiliently biased (62;162;262) into its first position.

5. A mechanism according to any preceding claim, in which the actuating member (1;101) is operable by manual means.

6. A mechanism according to any preceding claim, in which the actuating member is a lever (1;101).

7. A mechanism according to claim 6, in which the release means is connected to the holding means by a link rod (10;110) extending longitudinally within the lever.

8. A mechanism according to claim 6 or 7, in which the release means comprises a hand-operable portion of the lever which is adjacent a portion of the lever which is shaped for gripping by hand.

9. A mechanism according to claim 8, in which the release means includes a resilient biasing means (155) which must be overcome by movement of the hand-operable portion (152) relative to the lever (101), simultaneously with operation of the lever, in order to release the holding means.

10. A mechanism according to any of claims 1 to 5, in which the actuating member comprises a hand operated pistol grip which when pulled operates the actuating member.

11. A mechanism according to any of claims 1 to 5, in which the actuating member comprises a foot operated pedal (201), biased to extend upwardly and forwardly, which when depressed operates the actuating member.

12. A mechanism according to any preceding claim, in which the release means (263,267) is operated at a position (267) separated from the actuating member (201).

13. A mechanism according to any preceding claim, in which the release means comprises a mechanical means (10,12;110,152;263,267)

14. A mechanism according to any preceding claim, in which the release means comprises an hydraulic means (264,265,266,268,270).

15. A mechanism according to any preceding claim, in which the blocking means comprises the cooperation between the drive element (2;102;202), the actuating member (1;101;201) and the coupling means (15,17;115,117;215,217) in resisting the movement of the actuating member from its second position prior to release of the holding means (4;104;204).

16. A mechanism according to any preceding claim, in which the coupling means comprises a pivotable connection (15,17;115,117;215,217) between the actuating member and the drive element.

17. A mechanism according to claim 16, in which the fulcrum (15;115;215) of the pivotable connection is movable.

18. A mechanism according to claim 16 or 17, in which the coupling means comprises a pin (15;115;215) mounted on one of the actuating member and the drive element, slidably located in a slot (17;117;217) in the other of these.

19. A mechanism according to claim 18, in which the slot (17;117;217) extends substantially perpendicular to the direction of movement of the output member (3;103;203) in the released position of the drive element.

20. A mechanism according to any preceding claim, in which the output member (3;103;203) is slidably mounted on the mounting means (8;108;208).

21. A mechanism according to claim 20, in which the output member (3;103;203) is elongate.

22. A mechanism according to any preceding claim, in which the holding means comprises an element (4;104;204) which has an aperture through which the output member (3;103;203) extends and through which the output member is free to move in the released position of the holding means, the holding element being tiltable to engage the output member frictionally in its aperture.

23. A mechanism according to claim 22, in which the holding element is resiliently biased (25;125;225) into a position which prevents the output member from passing through its aperture.

24. A mechanism according to claim 22 or 23, in which the holding element (4;104;204) is constrained in its released position when the actuating member is in its first position.

25. A mechanism according to any preceding claim, including means (50-62) to sense when the parking brake has been applied, and to activate a remote signalling means to indicate such application.

26. A mechanism according to claim 25, in which the sensing means comprises a switch (53,62) sensitive to applied force mounted on the output side of the output member.

27. A mechanism according to any preceding claim, in which means (34,36,38;40,42,44;29,30,32) are included to compensate for the wear in the brake mechanism of the vehicle, the compensation means comprising means to vary the rest position of the output member.

28. A mechanism according to claim 27, in which the compensation means comprises an abutment element (36;40) which abuts the mounting means (8) to define the rest position of the mechanism and which is slidable on the output member so as to be brought into contact with a stop on the mounting means when adjustment is necessary, such contact moving the abutment element on the output member to re-define the rest position.

29. A mechanism according to claim 28, in which the sensing means comprises a switch sensitive to the position of the slidable abutment element.

30. A mechanism according to claim 27, in which the compensation means comprises resilient biasing means (32) acting between the output member and the mounting means to apply a compensating force to the output member to define its rest position.

31. A mechanism according to any of claims 27 to 30, in which retaining means are provided to hold the compensation means within the actuating means, when a restraining force is not being applied to the output member.

32. A mechanism according to any preceding claim, including damping means (60-72) for damping movement of the output member, at least in its brake-releasing direction.

33. A mechanism according to claim 32, in which the damping means comprises a piston (68) which is movable in a cylinder (60) containing a damping fluid (72).

34. A mechanism according to claim 33, in which the piston (68) has a bleed passage (70) allowing the damping fluid (72) to pass from one side of the piston to the other during its movement in the cylinder (60).

## Patentansprüche

1. Betätigungsmechanismus für die Feststellbremse eines Fahrzeuges, bestehend aus einem Betätigungselement (1;101;201), das relativ zu einer Mechanismus-Montageeinrichtung (8;108;208) zwischen einer ersten, Bremse-gelöst-, und einer zweiten, Bremse-betätigt-, Stellung bewegbar ist, ein Ausgangselement (3;103;203), das sich in eine die Bremse anlegende Richtung bewegt, wenn das Betätigungselement von seiner ersten in seine zweite Stellung bewegt wird, ein schwenkbares Treiberelement (2;102) mit einer Öffnung, durch die sich das Ausgangselement erstreckt, welches von einer freigegebenen Stellung in eine Stellung schwenkbar ist, bei der es das Ausgangselement reibschlüssig in seiner Öffnung erfasst, einer lösbaren Halteeinrichtung (4;104;204) zum Halten des Ausgangselementes wenigstens dann, wenn dieses sich in einer Stellung entsprechend der zweiten Stellung des Betätigungselementes befindet, und einer Freigabe-Einrichtung (10,12;110,152;263-270) für die Halteeinrichtung, dadurch gekennzeichnet, dass sich das Ausgangselement in eine die Bremse freigebende Richtung bewegt, wenn das Betätigungselement von seiner zweiten in seine erste Stellung bewegt wird, das schwenkbare, die Öffnung aufweisende Treiberelement (2;102) durch eine Kupplungseinrichtung (15,17;115,117;215-217) mit dem Betätigungselement verbunden ist und das Betätigungselement mit dem Ausgangselement verknüpft, und eine Blockier-Einrichtung vorgesehen ist, die eine Bewegung des Betätigungselementes von seiner zweiten in die erste Stellung vor Lösen der Halteeinrichtung verhindert.

2. Mechanismus nach Anspruch 1, dadurch gekennzeichnet, dass eine Federvorspann-Einrichtung (22;122;222) wirkt, um die Eingriffnahme des Treiberelementes mit dem Ausgangselement zu unterstützen.

3. Mechanismus nach Anspruch 1 oder 2, dadurch gekennzeichnet, dass das Betätigunselement an der Montageeinrichtung schwenkbar gehalten ist (6;106;206).

4. Mechanismus nach einem irgendeinem vorhergehenden Anspruch, dadurch gekennzeichnet, dass das Betätigungselement federnd in die erste Stellung vorgespannt ist (62;162;262).

5. Mechanismus nach einem irgendeinem vorhergehenden Anspruch, dadurch gekennzeichnet, dass das Betätigungselement (1;101) durch eine manuelle Einrichtung bedienbar ist.

6. Mechanismus nach einem irgendeinem vorhergehenden Anspruch, dadurch gekennzeichnet, dass das Betätigungselement ein Hebel (1;101) ist.

7. Mechanismus nach Anspruch 6, dadurch gekennzeichnet, dass die Freigabe-Einrichtung mit der Halteeinrichtung durch eine Verbindungsstange (10;110) verbunden ist, die sich in Längsrichtung innerhalb des Hebels erstreckt.

8. Mechanismus nach Anspruch 6 oder 7, dadurch gekennzeichnet, dass die Freigabe-Einrichtung einen Handbetätigungsbereich des Hebels umfasst, der sich nahe einem Teil des Hebels befindet, der zum Greifen mittels einer Hand geformt ist.

9. Mechanismus nach Anspruch 8, dadurch gekennzeichnet, dass die Freigabe-Einrichtung eine Federvorspann-Einrichtung (155) enthält, die durch Bewegung des von Hand bedienbaren Bereichs (152) relativ zum Hebel (101) gleichzeitig mit der Betätigung des Hebels überwunden werden muss, um die Halteeinrichtung freizugeben.

10. Mechanismus nach einem der Ansprüche 1 bis 5, dadurch gekennzeichnet, dass das Betätigungselement einen handbetätigten Pistolengriff umfasst, der das Betätigungselement beaufschlagt, wenn er gezogen wird.

11. Mechanismus nach einem der Ansprüche 1 bis 5, dadurch gekennzeichnet, dass das Betätigungselement ein Fussbetätigungspedal (201) umfasst, welches vorgespannt ist, so dass es sich nach oben und nach vorne erstreckt und das Betätigungselement beaufschlagt, wenn es niedergedrückt wird.

12. Mechanismus nach irgendeinem vorhergehenden Anspruch, dadurch gekennzeichnet, dass die Freigabe-Einrichtung (263,267) in einer Position (267) getrennt vom Betätigungselement (201) bedient wird.

13. Mechanismus nach irgendeinem vorhergehenden Anspruch, dadurch gekennzeichnet, dass die Freigabe-Einrichtung eine mechanische Einrichtung (10,12;110,152;263,267) umfasst.

14. Mechanismus nach irgendeinem vorhergehenden Anspruch, dadurch gekennzeichnet, dass die Freigabe-Einrichtung eine hydraulische Einrichtung (264,265,266,268,270) umfasst.

15. Mechanismus nach irgendeinem vorhergehenden Anspruch, dadurch gekennzeichnet, dass die Blockier-Einrichtung das Zusammenwirken zwischen dem Treiberelement (2;102;02), dem Betätigungselement (1;101;201) und der Kupplungseinrichtung (15,17;115,117;215,217) zum Zwecke der Hemmung der Bewegung des Betätigungselementes von seiner zweiten Stellung vor Freigabe der Halteeinrichtung (4;104;204) umfasst.

16. Mechanismus nach irgendeinem vorhergehenden Anspruch, dadurch gekennzeichnet, dass die Kupplungseinrichtung eine Schwenkverbindung (15,17;115,117;215,217) zwischen dem Betätigungselement und dem Treiberelement umfasst.

17. Mechanismus nach Anspruch 16, dadurch gekennzeichnet, dass der Drehpunkt (15;115;215) der Schwenkverbindung bewegbar ist.

18. Mechanismus nach Anspruch 16 oder 17, dadurch gekennzeichnet, dass die Kupplungseinrichtung einen Stift (15;115;215) umfasst, der entweder am Betätigungselement oder dem Treiberelement montiert ist und gleitbar in einem Langloch (17;117;217) im betreffenden anderen Element angeordnet ist.

19. Mechanismus nach Anspruch 18, dadurch gekennzeichnet, dass sich das Langloch (17;117;217) im wesentlichen senkrecht zur Bewegungsrichtung des Ausgangselementes (3;103;203) in der freigegebenen Stellung des Treiberelementes erstreckt.

20. Mechanismus nach irgendeinem vorhergehenden Anspruch, dadurch gekennzeichnet, dass das Ausgangselement (3;103;203) an der Montageeinrichtung (8;108;208) gleitbar montiert ist.

21. Mechanismus nach Anspruch 20, dadurch gekennzeichnet, dass das Ausgangselement (3;103;203) länglich ist.

22. Mechanismus nach irgendeinem vorhergehenden Anspruch, dadurch gekennzeichnet, dass die Halteeinrichtung ein Element (4;104;204) umfasst, das eine Öffnung hat, durch die sich das Ausgangselement (3;103;203) erstreckt und durch die sich das Ausgangselement frei in der freigegebenen Stellung der Halteeinrichtung bewegen kann, wobei das Halteelement schwenkbar ist, um das Ausgangselement reibschlüssig in der Öffnung zu erfassen.

23. Mechanismus nach Anspruch 22, dadurch gekennzeichnet, dass das Halteelement federnd (25;125;225) in eine Stellung vorgespannt ist, bei der das Ausgangselement an einer Durchführung durch die Öffnung gehindert ist.

24. Mechanismus nach Anspruch 22 oder 23, dadurch gekennzeichnet, dass das Halteelement (4;104;204) in seiner freigegebenen Position zwangsmässig gehalten ist, wenn sich das Betätigungselement in seiner ersten Stellung befindet.

25. Mechanismus nach irgendeinem vorhergehenden Anspruch, gekennzeichnet durch eine Einrichtung (50-62) zur Erfassung, wann die Feststellbremse angelegt worden ist, und zur Aktivierung einer Fernsignaleinrichtung, welche das Anlegen der Bremse anzeigt.

26. Mechanismus nach Anspruch 25, dadurch gekennzeichnet, dass die Erfassungseinrichtung einen Schalter (53,62) umfasst, der auf die angelegte Kraft anspricht und an der Ausgangsseite des Ausgangselementes montiert ist.

27. Mechanismus nach irgendeinem vorgehenden Anspruch, dadurch gekennzeichnet, dass eine Einrichtung (34,36,38;40,42,44;29,30,32) vorgesehen ist, die Verschleiss des Bremsmechanismus des Fahrzeuges ausgleicht, wobei die Ausgleichseinrichtung eine Einrichtung umfasst, um die Ruheposition des Ausgangselementes zu verändern.

28. Mechanismus nach Anspruch 27, dadurch gekennzeichnet, dass die Ausgleichseinrichtung ein Anlageelement (36;40) umfasst, welches an der Montageeinrichtung (8) anliegt, um die Ruheposition des Mechanismus zu definieren, und am Ausgangselement gleitbar ist, um in Berührung mit einem Anschlag an der Montageeinrichtung gebracht zu werden, wenn eine Einstellung erforderlich ist, wobei besagte Berührung das Anlageelement am Ausgangselement bewegt, so dass die Ruheposition erneut definiert wird.

29. Mechanismus nach Anspruch 28, dadurch gekennzeichnet, dass die Erfassungseinrichtung einen auf die Position des gleitbaren Anlageelementes ansprechenden Schalter umfasst.

30. Mechanismus nach Anspruch 27, dadurch gekennzeichnet, dass die Ausgleichseinrichtung eine Federvorspanneinrichtung (32) umfasst, die zwischen dem Ausgangselement und der Montageeinrichtung wirkt, um eine Kompensationskraft auf das Ausgangselement auszuüben, um dessen Ruheposition zu definieren.

31. Mechanismus nach irgendeinem der Ansprüche 27 bis 30, dadurch gekennzeichnet, dass eine Rückhalteeinrichtung vorgesehen ist, um die Ausgleichseinrichtung in der Betätigungseinrichtung zu halten, wenn keine Rückhaltekraft auf das Ausgangselement einwirkt.

32. Mechanismus nach einem irgendeinem vorhergehenden Anspruch, gekennzeichnet durch eine Dämpfungseinrichtung (60-72) zur Dämpfung der Bewegung des Ausgangselementes wenigstens in der die Bremse freigebenden Richtung.

33. Mechanismus nach Anspruch 32, dadurch gekennzeichnet, dass die Dämpfungseinrichtung einen Kolben (68) umfasst, der in einem Zylinder (60) bewegbar ist, der ein Dämpfungsfluid (72) enthält.

34. Mechanismus nach Anspruch 33, dadurch gekennzeichnet, dass der Kolben (68) eine Drosselpassage (70) aufweist, die eine Strömung des Dämpfungsfluids (72) von einer Seite des Kolbens zur anderen während der Bewegung im Zylinder (60) ermöglicht.

## Revendications

1. Mécanisme d'actionnement pour frein de stationnement d'un véhicule automobile, comprenant un organe d'actionnement (1;101;201) qui est mobile par rapport à un moyen (8;108;208) de montage du mécanisme entre une première position correspondant à l'état desserré du frein et une seconde position correspondant à l'état serré du frein, un organe de sortie (3;103;203) qui se déplace dans une direction de serrage du frein lorsque l'organe d'actionnement se déplace de sa première à sa seconde position, un organe basculant de commande (2;102) possédant une ouverture à travers laquelle s'étend l'organe de sortie, et qui peut basculer d'une position dégagée à une position dans laquelle il est en prise, par frottement, avec l'organe de sortie passant dans son ouverture, un moyen de retenue dégageable (4;104;204) pour retenir l'organe de sortie au moins lorsqu'il est dans une position correspondant à la seconde position de l'organe d'actionnement, et un moyen de libération (10,12;110,152;263-270) pour dégager l'organe de retenue, caractérisé en ce que l'organe de sortie se déplace dans une direction de desserrage du frein lorsque l'organe d' actionnement se déplace de sa seconde à sa première position, en ce que l'élément basculant de commande (2;102), qui possède une ouverture, est relié par un moyen de couplage (15,17;115,117;215-217) à l'organe d'actionnement et accouple cet organe d'actionnement à l'organe de sortie, et en ce qu'un moyen de blocage empêche un mouvement de l'organe d' actionnement de sa seconde à sa première position avant le dégagement du moyen de retenue.

2. Mécanisme selon la revendication 1, dans lequel un moyen élastique de précontrainte (22;122;222) agit de manière à assister la mise en prise de l'élément de commande avec l'organe de sortie.

3. Mécanisme selon la revendication 1 ou 2, dans lequel l'organe d'actionnement est monté pivotant (6;106;206) sur le moyen de montage.

4. Mécanisme selon l'une quelconque des revendications précédentes, dans lequel l'organe d'actionnement est sollicité élastiquement (62;162;262) dans sa première position.

5. Mécanisme selon l'une quelconque des revendications précédentes, dans lequel l'organe d'actionnement (1;101) est manoeuvrable par un moyen manuel.

6. Mécanisme selon l'une quelconque des revendications précédentes, dans lequel l'organe d'actionnement est un levier (1;101).

7. Mécanisme selon la revendication 6, dans lequel le moyen de libération est relié au moyen de retenue par une tige de liaison (10;110) qui s'étend longitudinalement à l'intérieur du levier.

8. Mécanisme selon la revendication 6 ou 7, dans lequel le moyen de libération comprend une partie du levier, qui est actionnable à la main et qui est adjacente à une partie du levier conformée pour être empoignée.

9. Mécanisme selon la revendication 8, dans lequel le moyen de libération comprend un moyen élastique de précontrainte (155) dont la force doit être surmontée par un déplacement de la partie (152), actionnable à la main, par rapport au levier (101), simultanément à la manoeuvre du levier, afin de dégager le moyen de retenue.

10. Mécanisme selon l'une quelconque des revendications 1 à 5, dans lequel l'organe d'actionnement comprend une poignée pistolet actionnée à la main, qui, lorsqu'elle est tirée, manoeuvre l'organe d'actionnement.

11. Mécanisme selon l'une quelconque des revendications 1 à 5, dans lequel l'organe d'actionnement comprend une pédale (201), actionnée au pied, qui est précontrainte de façon à s'étendre vers le haut et vers l'avant et qui, lorsqu'elle est enfoncée, manoeuvre l'organe d'actionnement.

12. Mécanisme selon l'une quelconque des revendications précédentes, dans lequel le moyen de libération (263,267) est manoeuvré à un emplacement (267) séparé de l'organe d'actionnement (201).

13. Mécanisme selon l'une quelconque des revendications précédentes, dans lequel le moyen de libération est constitué par un moyen mécanique (10,12;110,152;263,267).

14. Mécanisme selon l'une quelconque des revendications précédentes, dans lequel le moyen de libération comprend un moyen hydraulique (264,265,266,268,270).

15. Mécanisme selon l'une quelconque des revendications précédentes, dans lequel le moyen de blocage est constitué par la coopération entre l'élément de commande (2;102;202), l'organe d'actionnement (1;101;201) et le moyen de couplage (15,17;115,117;215,217) qui interagissent pour résister au déplacement de l'organe d'actionnement à partir de sa seconde position avant le dégagement du moyen de retenue (4;104;204).

16. Mécanisme selon l'une quelconque des revendications précédentes, dans lequel le moyen de couplage est constitué par une liaison pivotante (15,17;115,117;215,217) entre l'organe d'actionnement et l'élément de commande.

17. Mécanisme selon la revendication 16, dans lequel le pivot (15;115;215) de la liaison pivotante est mobile.

18. Mécanisme selon la revendication 16 ou 17, dans lequel le moyen de couplage est constitué par une cheville (15;115;215) qui est montée sur l'un des organe d'actionnement et élément de commande et qui est engagée à coulissement dans une fente (17;117;217) de l'autre de ces deux éléments.

19. Mécanisme selon la revendication 18, dans lequel la fente (17;117;217) s'étend sensiblement perpendiculairement à la direction du mouvement de l'organe de sortie (3;103;203) dans la position dégagée de l'élément de commande.

20. Mécanisme selon l'une quelconque des revendications précédentes, dans lequel l'organe de sortie (3;103;203) est monté à coulissement sur le moyen de montage (8;108;208).

21. Mécanisme selon la revendication 20, dans lequel l'organe de sortie (3;103;203) est allongé.

22. Mécanisme selon l'une quelconque des revendications précédentes, dans lequel le moyen de retenue comprend un élément (4;104;204) qui possède une ouverture à travers laquelle s'étend l'organe de sortie (3;103;203) et dans laquelle l'organe de sortie est libre de se déplacer dans la position dégagée du moyen de retenue, l'élément de retenue pouvant être incliné pour entrer en prise, par frottement, avec l'organe de sortie passant dans son ouverture.

23. Mécanisme selon la revendication 22, dans lequel l'élément de retenue est sollicité élastiquement (25;125;225) dans une position qui empêche l'organe de sortie de passer à travers son ouverture.

24. Mécanisme selon la revendication 22 ou 23, dans lequel l'élément de retenue (4;104;204) est maintenu de force dans sa position dégagée lorsque l'organe d'actionnement est dans sa première position.

25. Mécanisme selon l'une quelconque des revendications précédentes, comprenant un moyen (50-62) pour détecter le moment où le frein de stationnement a été serré, et pour activer un moyen distant de signalisation propre à indiquer un tel serrage du frein.

26. Mécanisme selon la revendication 25, dans lequel le moyen détecteur comprend un interrupteur (53,62), qui est sensible à une force appliquée et qui est monté du côté sortie de l'organe de sortie.

27. Mécanisme selon l'une quelconque des revendications précédentes, dans lequel des moyens (34,36,38;40,42,44;29,30,32) sont prévus pour compenser l'usure du mécanisme de freinage du véhicule, les moyens de compensation comprenant un moyen pour faire varier la position de repos de l'organe de sortie.

28. Mécanisme selon la revendication 27, dans lequel les moyens de compensation comprennent un élément de butée (36;40), qui bute contre le moyen de montage (8) pour définir la position de repos du mécanisme et qui peut coulisser sur l'organe de sortie de manière à être amené en contact avec une butée sur le moyen de montage lorsqu'un ajustement est nécessaire, un tel contact déplaçant l'élément de butée sur l'organe de sortie afin de redéfinir la position de repos.

29. Mécanisme selon la revendication 28, dans lequel le moyen de détection comprend un interrupteur sensible à la position de l'élément de butée coulissant.

30. Mécanisme selon la revendication 27, dans lequel les moyens de compensation comprennent un moyen élastique de précontrainte (32) qui agit entre l'organe de sortie et le moyen de montage afin d'appliquer une force de compensation à l'organe de sortie pour définir sa position de repos.

31. Mécanisme selon l'une quelconque des revendications 27 à 30, dans lequel un moyen de retenue est prévu pour maintenir les moyens de compensation à l'intérieur du moyen d'actionnement, lorsqu'une force de retenue n'est pas appliquée à l'organe de sortie.

32. Mécanisme selon l'une quelconque des revendications précédentes, comportant un moyen amortisseur (60-72) pour amortir le mouvement de l'organe de sortie, au moins dans son sens de déplacement correspondant au desserrage du frein.

33. Mécanisme selon la revendication 32, dans lequel le moyen amortisseur comprend un piston (68) qui est mobile dans un cylindre (60) contenant un fluide amortisseur (72).

34. Mécanisme selon la revendication 33, dans lequel le piston (68) possède un passage de fuite (70) qui permet au fluide amortisseur (72) de passer d'un côté à l'autre du piston pendant son mouvement dans le cylindre (60).
